# FASCICULE DE BREVET EUROPEEN

(11) **EP 3 701 061 B1**
(45) Date de publication et mention de la délivrance du brevet: **19.05.2021**
(21) Numéro de dépôt: 18800739.7
(22) Date de dépôt: 26.10.2018
(51) Int. Cl.: C23C 4/134, C23C 4/129, C23C 4/10, C23C 28/04

(54) **PIECE COMPORTANT UN REVETEMENT DE PROTECTION A COMPOSITION GRADUELLE**
TEIL MIT EINER SCHUTZBESCHICHTUNG MIT GRADUELLER ZUSAMMENSETZUNG
PART COMPRISING A PROTECTIVE COATING HAVING A GRADUAL COMPOSITION

(30) Priorité: 26.10.2017 FR 1760089
(43) Date de publication de la demande: 02.09.2020
(73) Titulaire: Safran, 75015 Paris (FR)
(72) Inventeur: BIANCHI, Luc, 77550 Moissy-Cramayel (FR); SALLOT, Pierre, 77550 Moissy-Cramayel Cedex (FR)
(74) Mandataire: Regimbeau
(86) Numéro de dépôt international: PCT/FR2018/052668
(87) Numéro de publication internationale: WO 2019/081870

(56) Documents cités:
- EP-A1- 2 781 616
- EP-A1- 2 781 617
- EP-A1- 3 168 323
- WO-A1-2015/080839

## Description

### DOMAINE TECHNIQUE GÉNÉRAL ET ART ANTÉRIEUR

La présente invention concerne en général les traitements surfaciques appliqués aux pièces mécaniques, notamment lorsqu'elles sont confrontées à des conditions d'utilisation exigeantes.

Le domaine d'application de l'invention est notamment celui des couches de matériaux protecteurs déposées sur des pièces réalisées en matériaux composites à matrice céramique utilisées dans les moteurs d'aéronefs, et plus particulièrement dans les chambres de combustion, les turbines haute pression et les composants d'échappement des moteurs.

L'invention est néanmoins applicable à n'importe quel type de pièce comportant des portions réalisées en matériau composite à matrice céramique.

Les composites à matrice céramique (CMC) sont de plus en plus largement utilisés dans l'industrie aéronautique pour leurs excellentes propriétés structurelles, leur faible densité ainsi que leur excellente tenue à l'oxydation jusqu'à des températures de l'ordre de 1000°C.

Pour faire face à une exposition prolongée à de telles conditions, par exemple dans la chambre de combustion d'un moteur d'aéronef, les pièces réalisées en matériau composite à matrice céramique sont classiquement recouvertes d'une couche de Silicium protégeant la pièce contre l'oxydation, l'oxydation produisant de la silice (SiO2).

Une couche de SiO2 se forme en surface de la couche de silicium, la vitesse de formation du SiO2 diminuant au fur et à mesure que la couche de SiO2 s'épaissit, formant ainsi une barrière ralentissant l'oxydation et limitant la consommation du silicium Si présent dans la matrice du matériau composite.

Dans le cas d'une utilisation en atmosphère de corrosion humide, en présence d'espèces comprenant des hydroxydes OH (g), la couche de silice se volatilise très rapidement dès 1100 °C sous forme d'espèces d'acides siliciques de formule générale SiOₓ(OH)₄₋₂ₓ, telles que de l'acide orthosilicique Si(OH)4 (g) ou de l'acide métasilicique SiO(OH)2 (g).

Ce phénomène entraine une diminution de la vitesse nette de croissance de la silice SiO2 dont l'épaisseur tend vers une valeur limite et une récession accélérée du silicium présent dans la matrice du matériau composite.

Pour répondre à ce phénomène, il est connu dans l'art antérieur de déposer une couche de céramique conçue pour faire obstacle à la diffusion des hydroxydes OH accélérant la dégradation de la pièce, qui présente une faible conductivité thermique et qui résiste à l'érosion causée par des particules solides.

Ces solutions rencontrent toutefois des limites, notamment en cas d'écaillage de la couche de céramique de surface, de fissurations dues à des chocs ou à des cycles thermiques générant des gradients de contraintes entre matériaux ayant des coefficients de dilatation trop différents.

Ainsi, la couche de silice est de nouveau exposée à une atmosphère de corrosion humide, conduisant à une dégradation accélérée de sa structure et une diminution de la durée de vie de la pièce.

Il est également connu dans l'état de la technique de réaliser des sous-couches comportant de l'aluminium dans les systèmes de barrières thermiques des chambres de combustion ou des composants de turbine haute pression réalisées en superalliage à base de nickel et/ou de cobalt.

L'oxydation de ces sous-couches génère une couche d'alumine, qui protège la pièce contre une oxydation plus importante, notamment en milieu corrosif humide grâce à la bonne stabilité chimique de l'alumine vis-à-vis de la vapeur d'eau.

L'alumine présente en outre une vitesse de formation plus faible que la silice, ce qui permet d'augmenter la durée de vie de la protection grâce au besoin réduit en quantité de matière nécessaire à alimenter la réaction.

L'alumine présente également l'avantage d'une bonne compatibilité physico-chimique avec la barrière thermique en céramique, et présente également un coefficient de dilatation thermique proche de celui de la barrière thermique en céramique.

L'utilisation de telles sous-couches génératrices d'alumine pour la protection de matériaux riches en Si tels que les composites à matrice céramique ou les siliciures (nitrure de silicium Si3N4, siliciure de molybdène MoSix, siliciure de niobium NbSi, ...) est cependant contre-indiquée en raison de l'importante différence entre les coefficients de dilatation thermique des différents substrats.

En outre, un phénomène d'inter-diffusion croisée de la pièce en composite à matrice céramique riche en Si et de la couche génératrice d'alumine riche en aluminium entraîne la formation de phases non désirées à faible ductilité, fragilisant l'interface entre la couche de protection et la pièce et pouvant mener à l'écaillage de la couche de protection, laissant la pièce vulnérable à la corrosion.

Ainsi, dans l'état de l'art actuel, il n'existe pas de solutions efficaces permettant de faire le lien entre les matériaux à base de siliciures, efficient mécaniquement mais peu résistant à l'oxydation à haute température, et les matériaux alumine-formeurs résistants à l'oxydation mais possédant des propriétés mécaniques modestes à température élevée. La présente invention se propose de remédier à ce manque.

Des revêtements pour pièces de turbomachine formés à partir de deux poudres ayant chacune des propriétés différentes sont toutefois connus des documents EP 2 781 616 A1 et EP 2 781 617 A1.

### PRÉSENTATION GÉNÉRALE DE L'INVENTION

Un but de l'invention est d'améliorer la résistance à la corrosion en milieu humide des pièces en matériau composite à matrice céramique.

Un autre but est d'augmenter la durée de vie des pièces en matériau composite à matrice céramique.

Un autre but est d'assurer la cohésion mécanique et chimique d'un revêtement comportant principalement un composite d'aluminium avec une pièce comportant principalement un composite de silicium.

L'invention permet de répondre aux spécifications suivantes :
- Disposer d'un revêtement stable à haute température (<1100°C) ;
- Disposer d'un revêtement ayant un coefficient de dilatation proche de celui du substrat en carbure de silicium SiC/SiC et d'une barrière thermique céramique ;
- Former de l'alumine du côté riche en aluminium ;
- Ne pas interagir avec le substrat SiC/SiC du côté riche en silicium ;
- Ne pas former de phases intermétalliques fragiles dans la zone de transition aluminium/silicium.

L'invention propose ici d'utiliser certains matériaux phase MAX, dont la structure cristalline, les propriétés thermo-physiques ainsi que leur résistance à l'oxydation sont compatibles de ces spécifications. Par « matériau phase MAX », on comprendra des matériaux de formule générale Mₙ₊₁AXₙ où n est un entier compris entre 1 et 3, M est un métal de transition (choisi parmi sélénium, titane, vanadium, chrome, zirconium, niobium, molybdène, hafnium et tantale), A est un élément du groupe A, c'est-à-dire choisi parmi aluminium, silicium, phosphore, gallium, germanium, arsenic, cadmium, indium, étain, titane et plomb, et X est un élément choisi parmi le carbone et l'azote.

Sous un premier aspect, l'invention propose une pièce mécanique comportant au moins partiellement un matériau composite à matrice céramique, ledit matériau composite étant recouvert au moins localement d'au moins une couche de protection contre les dégradations environnementales, la couche de protection comportant une couche de revêtement à composition graduelle, cette couche à composition graduelle comportant au moins un matériau de phase MAX de silicium et un matériau de phase MAX d'aluminium, la couche à composition graduelle s'étendant au sein de la couche de protection entre une première hauteur par rapport à la pièce mécanique et une deuxième hauteur par rapport à la pièce mécanique, la composition de la couche à composition graduelle à la première hauteur ne comportant pas d'aluminium, la composition de la couche à composition graduelle à la deuxième hauteur ne comportant pas de silicium, une hauteur intermédiaire située entre la première hauteur et la deuxième hauteur présentant une composition comportant de l'aluminium et du silicium, la part d'aluminium et la part de silicium évoluant graduellement dans la couche à composition graduelle en fonction de la position de la hauteur intermédiaire, la part d'aluminium augmentant lorsque la hauteur intermédiaire se rapproche de la deuxième hauteur.

Un tel dispositif est avantageusement complété par les différentes caractéristiques suivantes prises seules ou en combinaison :
- La part d'aluminium et la part de silicium évoluent linéairement en fonction de la hauteur intermédiaire dans la couche à composition graduelle ;
- La somme des proportions molaires de silicium et d'aluminium est variable quelle que soit la position de la hauteur intermédiaire dans la couche composition graduelle ;
- La couche à composition graduelle comporte des matériaux phase MAX Ti3AIC2 et Ti3SiC2 ;
- Elle peut comporter :
   ∘ Une sous-couche, comportant essentiellement du silicium dont l'épaisseur peut être comprise entre 10µm et 100 µm;
   ∘ Une couche à composition graduelle d'une épaisseur comprise entre 50 µm et 500 µm, avec une substitution du Si par l'AI en s'éloignant de la pièce à un taux compris entre 0.1 et 0.4 at%/µm ;
   ∘ Une couche génératrice d'une épaisseur de 10 à 300 µm, composée essentiellement de Ti2AIC de manière à générer de l'alumine en surface lorsqu'elle est oxydée, pour augmenter la résistance en milieu humide ;
   ∘ Une couche d'alumine ;
   ∘ Une barrière environnementale ou thermique formée de céramiques, d'une épaisseur comprise entre 50 µm à 1000 µm, configurée pour limiter les transferts entre le milieu extérieur et la pièce ;
- Elle peut comporter :
   ∘ Une sous-couche composée essentiellement de silicium dont l'épaisseur peut être comprise entre 10µm et 100 µm;
   ∘ Une couche à composition graduelle d'une épaisseur comprise entre 50 µm et 500 µm, avec une substitution du Si par l'Al en s'éloignant de la pièce à un taux compris entre 0.1 et 0.4 at%/µm ;
   ∘ Une couche génératrice d'une épaisseur de 50 à 300 µm composée essentiellement de Ti2AIC de manière à générer de l'alumine en surface lorsqu'elle est oxydée, pour augmenter la résistance en milieu humide ;
   ∘ Une couche d'alumine ;
- Elle peut comporter :
   ∘ Une couche à composition graduelle d'une épaisseur comprise entre 50 µm et 500 µm, avec une substitution du Si par l'Al en s'éloignant de la pièce à un taux compris entre 0.1 et 0.4 at%/µm ;
   ∘ Une couche génératrice d'une épaisseur de 50 à 300 µm composée essentiellement de Ti3AIC2, configurée pour générer de l'alumine en surface lorsqu'elle est oxydée, de manière à augmenter la résistance en milieu humide ;
   ∘ Une couche d'alumine (7).

Selon un autre aspect, l'invention propose également un procédé de dépôt d'au moins une couche de protection sur une pièce mécanique, la couche de protection comportant au moins une couche à composition graduelle, le procédé comportant les étapes suivantes :
- Optimisation des conditions de préparation de surface avant dépôt;
- Réalisation de la couche à composition graduelle par projection thermique des espèces composant ladite couche à composition graduelle ;
la couche à composition graduelle comportant au moins un matériau de phase MAX de silicium et un matériau de phase MAX d'aluminium, le matériau phase MAX de silicium et le matériau phase MAX d'aluminium représentant une proportion donnée de la couche à composition graduelle, et la couche à composition graduelle est réalisée en injectant dans un dispositif de projection thermique d'une part des particules de matériau de phase MAX d'aluminium et d'autre part des particules de matériau de phase MAX de silicium, le matériau de phase MAX d'aluminium se substituant peu à peu au matériau de phase MAX de silicium en fonction de la hauteur de couche réalisée. Un tel procédé est avantageusement complété par les caractéristiques suivantes prises seules ou en combinaison :
- Les particules de matériau de phase MAX d'aluminium et matériau de de phase MAX silicium sont des poudres de Ti3AIC2 et de Ti3SiC2 mises en suspension dans un solvant dans deux contenants distincts, les suspensions de Ti3AIC2 et de Ti3SiC2 étant ensuite injectées en proportion contrôlée dans un plasma configuré pour chauffer et projeter les particules des suspensions de matériau de phase MAX sur la pièce, réalisant ainsi le dépôt ;
- Le solvant est un solvant non aqueux configuré pour limiter la formation d'oxydes à partir des particules de Ti3AIC2 et de Ti3SiC2, de manière à limiter la présence d'oxydes dans la couche à composition graduelle.

Un dispositif de projection thermique en voie liquide (appelé SPS pour « Suspension Plasma Spraying » ou SPPS pour « Suspension Precursor Plasma Spraying ») peut être utilisé pour mettre en œuvre un tel procédé de dépôt d'au moins une couche de matière sur une pièce, le dispositif comportant :
- Un premier réservoir contenant une suspension de particules de matériau de phase MAX d'aluminium dans un solvant ;
- Un deuxième réservoir contenant une suspension de particules de matériau de phase MAX de silicium dans un solvant ;
- Un premier et un deuxième injecteur de suspension, le premier injecteur de suspension étant lié au premier réservoir par l'intermédiaire d'une première conduite, le deuxième injecteur de suspension étant lié au deuxième réservoir par l'intermédiaire d'une deuxième conduite, les injecteurs de suspension étant configurés pour piloter le débit d'injection de particules d'aluminium et de silicium ;
- Une torche à plasma, configurée pour générer un plasma dans lequel sont injectées les particules de matériau de phase MAX d'aluminium et de matériau de phase MAX de silicium, le plasma chauffant et projetant ainsi les particules injectées en son sein sur la pièce.

Dans un tel dispositif, les particules de phases MAX d'aluminium et de silicium peuvent être des poudres de Ti3AIC2 et de Ti3SiC2.

Par torche à plasma, on comprendra tout dispositif de projection thermique permettant d'accélérer et de fondre des particules en suspension. On pourra citer à titre d'exemple l'HVOF (« High Velocity Oxy Fuel », pour projection par flamme supersonique), la projection plasma d'arc soufflé ou inductif (APS pour « Atmospheric Plasma Spraying » ou projection plasma sous pression atmosphérique, IPS pour « Inert gas Plasma Spraying » ou projection plasma en atmosphère neutre (inerte), VPS pour « Void Plasma Spraying » ou projection plasma sous vide partiel, ...)

### PRÉSENTATION DES FIGURES

D'autres caractéristiques, but et avantages de l'invention ressortiront encore de la description qui suit, laquelle est purement illustrative et non limitative, et doit être lue en regard des figures annexées sur lesquelles :
- la figure la est une représentation schématique d'une coupe d'un dispositif de protection conforme à l'invention, mettant en lumière les différentes couches d'un premier mode de réalisation ;
- la figure 1b est un graphique représentant l'évolution de la teneur en silicium et en aluminium des différentes couches d'un dispositif de protection conforme au premier mode de réalisation de l'invention en fonction de la hauteur dans cette couche ;
- la figure 2a est une représentation schématique d'une coupe d'un dispositif de protection conforme à l'invention, mettant en lumière les différentes couches d'un deuxième mode de réalisation ;
- la figure 2b est un graphique représentant l'évolution de la teneur en silicium et en aluminium des différentes couches d'un dispositif de protection conforme au deuxième mode de réalisation de l'invention en fonction de la hauteur dans cette couche ;
- la figure 3a est une représentation schématique d'une coupe d'un dispositif de protection conforme à l'invention, mettant en lumière les différentes couches d'un troisième mode de réalisation ;
- la figure 3b est un graphique représentant l'évolution de la teneur en silicium et en aluminium des différentes couches d'un dispositif de protection conforme au troisième mode de réalisation de l'invention en fonction de la hauteur dans cette couche ;
- la figure 4 est une représentation schématique d'un dispositif de fabrication par projection plasma de suspension (SPS) mettant en jeu deux réservoir de suspensions de matériau de phase MAX reliés à deux injecteurs séparés permettant l'introduction des particules de suspensions de matériau de phase MAX dans un jet de plasma afin de les chauffer et projeter à la surface du substrat pour réaliser un revêtement par ajout de matière selon l'invention.

### DESCRIPTION D'UN OU PLUSIEURS MODES DE MISE EN ŒUVRE ET DE RÉALISATION

Les modes de réalisation décrits ci-après concernent le cas d'une pièce mécanique 1 comprenant un substrat 5 réalisé en matériau composite à matrice céramique, dont au moins une partie a été recouverte d'une protection 2 contre l'usure liée à son environnement, cette protection 2 étant composée de couches successives suivant une direction Y, dont une couche présentant une composition graduelle 3, les couches étant déposées par un procédé d'ajout local de matière. Ceci est cependant présenté à but illustratif et non limitatif. On notera que la hauteur est nulle au niveau de la face du substrat 5 qui est opposée à la protection.

Dans cette description, on comprendra par « hauteur » la dimension suivant la direction Y. L'épaisseur des différentes couches est exprimée selon cette direction Y.

Dans ce qui suit, on notera que :
- le substrat 5 s'étend entre des hauteurs h1 et h2 (sachant que h1 est nulle et h2 est supérieure à h1),
- la sous-couche 4 s'étend entre des hauteurs h2 et h3 (sachant que h3 est supérieure à h2),
- la couche à composition graduelle 3 s'étend entre des hauteurs h3 et h4 (sachant que h4 est supérieure à h3),
- la couche génératrice d'alumine 5 s'étend entre des hauteurs h4 et h5 (sachant que h5 est supérieure à h4) et
- la couche d'alumine s'étend entre des hauteurs h5 et h6 (sachant que h6 est supérieure à h5).

Ces hauteurs h1-h6 seront définies plus précisément dans la suite de la description.

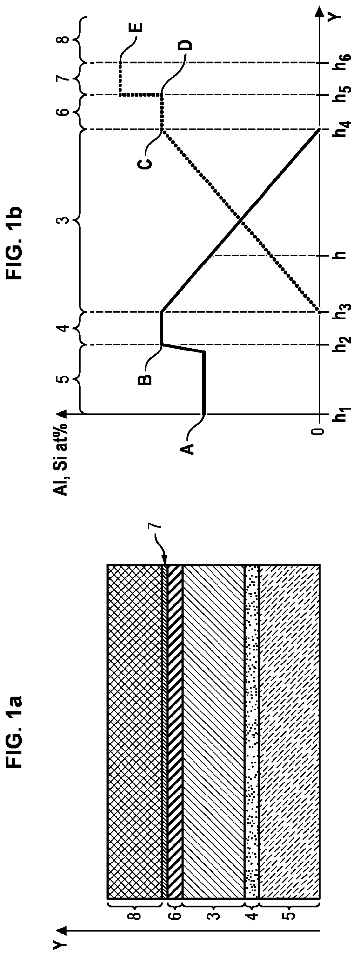

En référence à la figure 1a, un mode de réalisation d'une protection 2 contre l'usure réalisée en surface de la pièce 1 comporte plusieurs couches superposées selon l'axe Y normal à la surface de la pièce 1.

La couche de protection comprend successivement, depuis le substrat 5, une sous-couche 4, une couche à composition graduelle 3, une couche génératrice d'alumine 6 et une couche d'alumine 7.

La sous-couche 4 est située directement en contact du substrat 5 composant au moins en partie la pièce 1 en composite à matrice céramique. La sous-couche 4 présente une épaisseur pouvant être comprise entre 10µm et 100µm.

Le substrat 5 comportant des carbures de silicium SiC, la sous-couche 4 comporte essentiellement du silicium, de manière à assurer une continuité entre la pièce 1 et la protection 2 et une barrière de protection contre l'oxydation, ce qui assure l'adhérence et la compatibilité chimique et mécanique de la protection 2 et la pièce 1.

Par essentiellement, il est entendu que le taux de silicium dans la sous-couche 4 est supérieur à 90%.

La couche à composition graduelle 3 comporte une pluralité d'espèces chimiques, la proportion de certaines des espèces en présence étant fonction de la hauteur observée dans la couche depuis le substrat 5.

Ici, la couche à composition graduelle 3 comporte du Ti3AIC2 et du Ti3SiC2, en proportion différente en fonction de la hauteur considérée.

La partie inférieure de la couche à composition graduelle 3, étant en contact avec la sous-couche 4 de silicium, ne comporte que du Ti3SiC2, de manière à assurer la continuité mécanique et chimique du milieu entre la sous-couche 4 et la couche à composition graduelle 3.

La proportion en Ti3AIC2 dans la couche à composition graduelle 3 augmente en fonction de la hauteur, remplaçant le Ti3SiC2 dont la proportion diminue d'autant que celle du Ti3AIC2 augmente.

Au niveau de l'extrémité haute de la couche à composition graduelle 3, le Ti3AIC2 a totalement supplanté le Ti3SiC2.

La variation de la proportion en Ti3AIC2 dans la couche à composition graduelle 3 peut être linéaire, ou présenter tout autre profil, par exemple une courbe polynomiale ou exponentielle, étudié pour favoriser un comportement choisi comme la continuité du coefficient de dilatation thermique ou encore favoriser certains comportements dans certaines zones de la couche comme par exemple la capacité à combler les microfissures apparaissant dans la protection 2 lors de l'utilisation, ou encore respecter un compromis entre différents facteurs déterminés.

La capacité à combler les microfissures de cette couche est particulièrement profitable à l'augmentation de la durée de vie de la pièce.

La couche à composition graduelle 3 présente une épaisseur pouvant varier de 50µm à 500µm.

La couche génératrice d'alumine 6 recouvre la couche à composition graduelle 3.

La couche génératrice d'alumine 6 comporte du Ti2AIC, présentant de ce fait un coefficient de dilatation thermique similaire à celui de l'extrémité supérieure de la couche à composition graduelle 3 et assurant ainsi la compatibilité mécanique de ces deux couches.

La couche génératrice 6 permet de générer en s'oxydant la couche d'alumine 7 protectrice sur sa surface supérieure, limitant ainsi une oxydation plus profonde, et présentant également une stabilité chimique importante face à la vapeur d'eau.

La présence de Ti2AIC permet en outre de former de l'alumine jusqu'à une température de 1300°C.

Cette couche d'alumine 7 protège les couches comportant du silicium des réactions avec les espèces hydroxydes OH, la couche génératrice 6 présentant une épaisseur comprise entre 10µm et 300µm permettant de constituer un réservoir d'aluminium alimentant la réaction de formation d'alumine.

Une barrière thermique 8 recouvre la couche d'alumine 7 de manière à minimiser le transfert thermique entre le milieu environnant et la pièce 1, établissant de ce fait un gradient thermique entre l'environnement et la pièce 1, et limite donc la chauffe des multiples couches de protection.

La barrière thermique 8 est composée d'une couche de céramique à faible conductivité thermique, et présente une épaisseur comprise entre 50µm et 1000µm.

La céramique est choisie telle que son coefficient de dilatation est proche de celui de la couche génératrice 6 d'alumine.

Dans l'exemple de réalisation illustré en figure 1b, la teneur en aluminium et en silicium des différentes couches de protection est représentée en fonction de la hauteur de couche concernée.

Entre la hauteur h1 et la hauteur h2, correspondant à la couche de substrat 5 de la pièce 1, le taux de silicium présente une première valeur constante A, présentant toutefois une forte augmentation au voisinage de la hauteur h2. Le taux d'aluminium est nul dans cette couche.

Entre la hauteur h2 et la hauteur h3, correspondant à la sous-couche 4, le taux de silicium présente une deuxième valeur constante B supérieure à la première valeur A. Le taux d'aluminium est nul dans cette couche.

Entre la hauteur h3 et la hauteur h4, correspondant à la couche à composition graduelle 3, le taux de silicium diminue, passant d'une deuxième valeur B à un taux nul au niveau de la hauteur h4.

Le taux d'aluminium augmente, passant d'une valeur nulle à une troisième valeur C. Dans l'exemple illustré, la troisième valeur C est équivalente à la deuxième valeur B, mais il est envisageable qu'une espèce supplémentaire dans la couche à composition graduelle 3 puisse déplacer cette troisième valeur C et la placer à un niveau inférieur ou supérieur à la deuxième valeur B.

Pour une hauteur intermédiaire h comprise entre lesh3 et h4, l'aluminium et le silicium sont tous deux présents dans la composition de la couche.

Dans un mode de réalisation, la somme des fractions molaires d'aluminium et de silicium est constante quelle que soit la hauteur intermédiaire h considérée dans la couche à composition graduelle 3.

Dans d'autres modes de réalisation, la somme des fractions molaires d'aluminium et de silicium peut également être variable selon la hauteur intermédiaire h considérée dans la couche à composition graduelle 3.

Il est possible d'avoir une espèce de matériau de phase MAX en excès dans la couche à composition graduelle 3.

Entre la hauteur h4 et la hauteur h5, correspondant à la couche génératrice 6 d'alumine, le taux d'aluminium présente une quatrième valeur D constante. Cette quatrième valeur D peut être équivalente, inférieure ou supérieure à la troisième valeur C.

Le taux de silicium est nul dans cette couche.

Entre la h5 et la h6 hauteur, correspondant à la couche d'alumine 7, le taux d'aluminium présente une cinquième valeur E constante.

La cinquième valeur E est supérieure à la quatrième valeur D.

Le taux de silicium est nul dans cette couche.

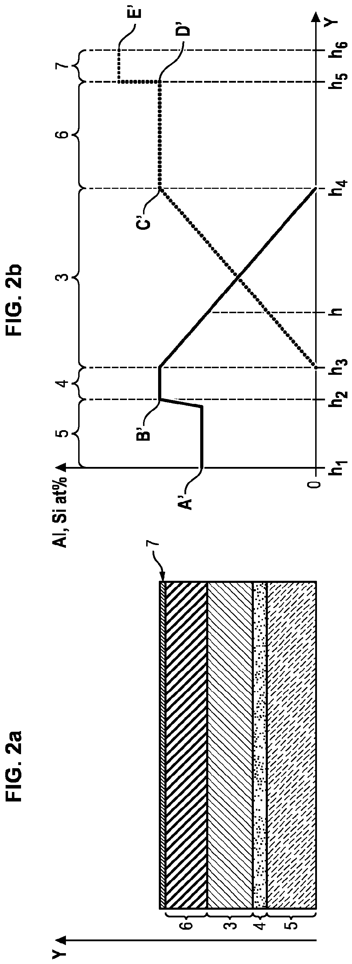

Dans l'exemple de réalisation illustré en figure 2a, lorsque la pièce 1 n'est pas soumise à des températures excédant les 1200°C au cours du fonctionnement, il n'est pas nécessaire de réaliser de barrière thermique 8. La couche d'alumine 7 suffit à protéger la pièce 1 de l'effet de réaction avec des espèces hydroxydes OH.

Un exemple de protection 2 comporte, conformément au premier mode de réalisation, une sous-couche 4 couverte par une couche à composition graduelle 3, elle-même couverte par une couche génératrice 6 d'alumine, l'alumine générée formant une couche d'alumine 7 sur la couche génératrice 6 et assurant ainsi la protection chimique face aux espèces hydroxydes OH.

La différence réside dans le fait que la couche d'alumine 7 n'est pas recouverte par une barrière thermique 8, les températures auxquelles est soumise la pièce ne le nécessitant pas.

La sous-couche 4, d'une épaisseur de 10 à 100 µm, comporte essentiellement du silicium.

Par essentiellement, il est entendu que le taux de silicium dans la sous-couche est supérieur à 90%.

La couche à composition graduelle 3, d'une épaisseur de 50 à 500µm, comporte du Ti3AIC2 et du Ti3SiC2, dont les proportions sont fonction de la hauteur observée dans la couche.

La couche génératrice 6 comporte essentiellement du Ti2AIC. Par essentiellement, on entend que la fraction massique de Ti2AIC dans la couche génératrice 6 est supérieure à 90%.

La couche génératrice 6 présente toutefois une épaisseur comprise entre 50µm et 300µm, plus importante que dans le premier exemple de manière à assurer un réservoir chimique important en vue de maintenir la couche d'alumine 7 protectrice.

Dans l'exemple de réalisation illustré en figure 2b, la protection 2 comporte un profil de taux de présence en aluminium et en silicium similaire à celui présenté précédemment. On notera ici que les valeurs de h1-h6 peuvent différer de celles de la figure 1b.

Entre la hauteur h1 et la hauteur h2, correspondant à la couche de substrat 5 de la pièce 1, le taux de silicium présente une première valeur constante A', présentant toutefois une forte augmentation au voisinage de la deuxième hauteur h2. Le taux d'aluminium est nul dans cette couche.

Entre la hauteur h2 et la hauteur h3, correspondant à la sous-couche 4, le taux de silicium présente une deuxième valeur constante B'supérieure à la première valeur A'. Le taux d'aluminium est nul dans cette couche.

Entre la hauteur h3 et la hauteur h4, correspondant à la couche à composition graduelle 3, le taux de silicium diminue, passant d'une deuxième valeur B' à un taux nul au niveau de la quatrième hauteur h4.

Le taux d'aluminium augmente, passant d'une valeur nulle à une troisième valeur C'. Dans l'exemple illustré, la troisième valeur C' est équivalente à la deuxième valeur B', mais il est envisageable qu'une espèce supplémentaire dans la couche à composition graduelle 3 puisse déplacer cette troisième valeur C' et la placer à un niveau inférieur ou supérieur à la deuxième valeur B'.

Pour une hauteur intermédiaire h comprise entre la hauteur h3 et la hauteur h4, l'aluminium et le silicium sont tous deux présents dans la composition de la couche.

Entre la hauteur h4 et la hauteur h5, correspondant à la couche génératrice 6 d'alumine, le taux d'aluminium présente une quatrième valeur D' constante. Cette quatrième valeur D' peut être équivalente, inférieure ou supérieure à la troisième valeur C'.

Le taux de silicium est nul dans cette couche.

Entre la hauteur h5 et la hauteur h6, correspondant à la couche d'alumine 7, le taux d'aluminium présente une cinquième valeur E' constante.

La cinquième valeur E' est supérieure à la quatrième valeur D'.

Le taux de silicium est nul dans cette couche.

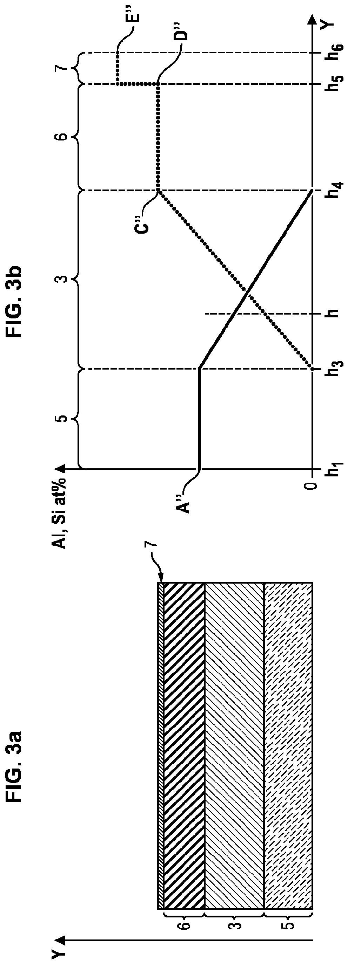

Dans l'exemple de réalisation illustré en figure 3a, lorsque la pièce 1 n'est pas soumise à des températures excédant les 1100°C, les contraintes générées par les dilatations thermiques différentielles sont moins importantes, et ne nécessitent plus la présence de la sous-couche 4 de silicium.

La couche génératrice 6 de Ti2AIC peut également être supprimée, au profit d'une couche de Ti3AIC2 présent dans la couche à composition graduelle 3, allégeant de ce fait le procédé de réalisation de la protection 2.

Le substrat 5 en surface de la pièce 1 est donc directement couvert par la couche à composition graduelle 3, d'une épaisseur de 50 à 500µm, comportant du Ti3AIC2 et du Ti3SiC2 dont les proportions sont fonction de la hauteur observée dans la couche.

La couche génératrice 6 comportant du Ti3AIC2 présente ici une épaisseur comprise entre 50µm et 300µm, de manière à assurer un réservoir chimique important en vue de maintenir la couche d'alumine 7 protectrice.

Dans l'exemple de réalisation illustré en figure 3b, la protection 2 comporte un profil de taux de présence en aluminium et en silicium différent de ceux présentés précédemment. On notera ici encore que les valeurs de h1-h6 peuvent différer de celles des figures 1*b et 2b. Par ailleurs, cette protection 2 ne comporte pas de sous-couche 4 : les hauteurs h2 et h3 sont donc égales.

Entre la hauteur h1 et la hauteur h3, correspondant à la couche de substrat 5 de la pièce 1, le taux de silicium présente une première valeur constante A". Le taux d'aluminium est nul dans cette couche.

Entre la hauteur h3 et la hauteur h4, correspondant à la couche à composition graduelle 3, le taux de silicium diminue, passant d'une première valeur A" à un taux nul au niveau de la hauteur h4.

Le taux d'aluminium augmente, passant d'une valeur nulle à une deuxième valeur C". Dans l'exemple illustré, la deuxième valeur C" est supérieure à la première valeur A", mais il est envisageable qu'une espèce supplémentaire dans la couche à composition graduelle 3 puisse déplacer cette deuxième valeur C" et la placer à un niveau inférieur ou égal à la première valeur A".

Pour une hauteur intermédiaire h comprise entre la hauteur h3 et la hauteur h4, l'aluminium et le silicium sont tous deux présents dans la composition de la couche à composition graduelle 3.

Entre la hauteur h4 et la hauteur h5, correspondant à la couche génératrice 6 d'alumine, le taux d'aluminium présente une troisième valeur D" constante. Cette troisième valeur D" peut être équivalente, inférieure ou supérieure à la deuxième valeur C".

Le taux de silicium est nul dans la couche génératrice 6.

Entre la hauteur h5 et la hauteur h6, correspondant à la couche d'alumine 7, le taux d'aluminium présente une quatrième valeur E" constante.

La quatrième valeur E" est supérieure à la troisième valeur D".

Le taux de silicium est nul dans la couche d'alumine 7.

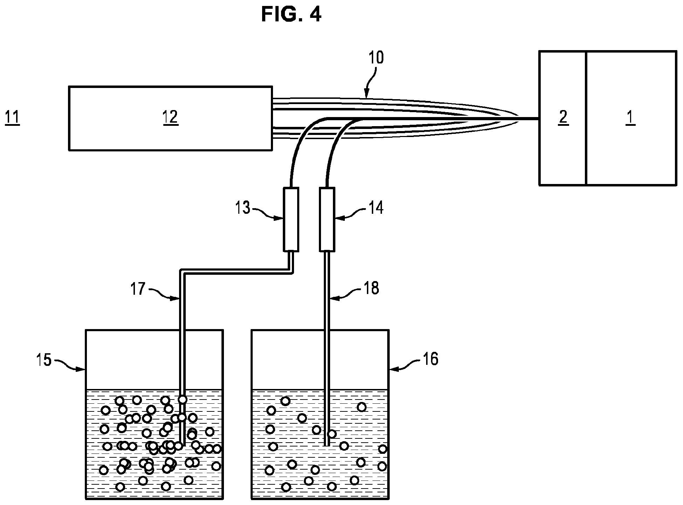

En référence à la figure 4, la protection 2 est au moins partiellement réalisée sur la pièce 1 à l'aide d'un procédé 9 d'ajout de matière projetant des particules sur la surface de la pièce 1 de manière à réaliser une couche de protection.

Dans ce qui suit, le procédé sera décrit en relation avec la réalisation d'une couche à composition graduelle 3. Ce procédé peut cependant être appliqué mutatis mutandis pour d'autres couches, comme la couche génératrice 6 d'alumine par exemple.

Le procédé 9 de réalisation de la couche à composition graduelle 3 repose sur un principe de projection thermique par plasma 10, des particules étant injectées dans le plasma pour être chauffées et projetées sur la pièce 1 de manière à former la couche à composition graduelle 3.

Dans le cas présent, les particules de Ti3AIC2 et de Ti3SiC2 sont stockées séparément et mises en suspension dans un solvant.

Les suspensions de Ti3AIC2 et de Ti3SiC2 sont ensuite injectées dans le plasma 10 à des débits respectifs pilotés pour respecter la proportion voulue de Al et de Si obtenue en fonction de la hauteur de couche réalisée.

Le solvant est ici non aqueux de manière à prévenir la formation d'oxydes dans la couche à composition graduelle 3 et ainsi garantir son homogénéité et ses propriétés mécaniques.

La projection peut également être réalisée sous atmosphère neutre de manière à limiter la formation de phases intermétalliques ou d'oxydes provenant de l'oxydation à haute température des matériaux projetés par l'atmosphère oxydante environnante.

Le dépôt par plasma, et donc à haute température, permet également d'obtenir lors du refroidissement à température ambiante des contraintes résiduelles en compression dans le revêtement déposé, ce qui limite ainsi l'endommagement global du système en renforçant son caractère auto-cicatrisant et donc sa tendance naturelle à la fermeture d'éventuelles fissures.

Il est également envisageable de réaliser le dépôt en utilisant différents procédés de projection thermique tels que la projection plasma de poudre à la pression atmosphérique (APS) ou sous gaz neutre (IPS), ou un procédé de projection de suspensions par flamme à haute vitesse (HVSFS ou similaire).

Le procédé 9 est réalisé à l'aide d'un dispositif de projection thermique 11 comportant une torche 12 générant un plasma 10, un premier 13 et un deuxième 14 injecteur mis en communication avec un premier 15 et un deuxième 16 réservoir au moyen d'une première 17 et d'une deuxième 18 conduite.

Le premier réservoir 15 contient une suspension de poudre de Ti3AIC2 dans un solvant, le deuxième réservoir 16 contenant une suspension de poudre de Ti3SiC2 dans un solvant.

Le premier injecteur 13 injecte la suspension de Ti3AIC2 dans le plasma, qui chauffe et projette la suspension sur la pièce 1, déposant ainsi les particules qui vont former la protection 2, le deuxième injecteur 14 injectant la suspension de Ti3SiC2 dans le plasma.

Les débits d'injection des deux suspensions sont pilotés conjointement, de manière à contrôler la teneur en aluminium et en silicium de la couche de protection formée, et faire varier ces proportions de manière à réaliser la couche à composition graduelle 3.

## Revendications

1. Pièce mécanique (1) comportant au moins partiellement un matériau composite à matrice céramique, ledit matériau composite étant recouvert au moins localement d'au moins une couche de protection (2) contre les dégradations environnementales, **caractérisée en ce que** la couche de protection (2) comporte une couche de revêtement à composition graduelle (3), cette couche à composition graduelle (3) comportant au moins un matériau de phase MAX de silicium et un matériau de phase MAX d'aluminium, la couche à composition graduelle (3) s'étendant au sein de la couche de protection (2) entre une première hauteur (h3) par rapport à la pièce mécanique (1) et une deuxième hauteur (h4) par rapport à la pièce mécanique (3), la composition de la couche à composition graduelle (3) à la première hauteur (h3) ne comportant pas d'aluminium, la composition de la couche à composition graduelle (3) à la deuxième hauteur (h4) ne comportant pas de silicium, une hauteur intermédiaire (h) située entre la première hauteur (h3) et la deuxième hauteur (h4) présentant une composition comportant de l'aluminium et du silicium, la part d'aluminium et la part de silicium évoluant graduellement dans la couche à composition graduelle (3) en fonction de la position de la hauteur intermédiaire (h), la part d'aluminium augmentant lorsque la hauteur intermédiaire (h) se rapproche de la deuxième hauteur (h4).

2. Pièce mécanique (1) selon la revendication 1, **caractérisée en ce que** la part d'aluminium et la part de silicium évoluent linéairement en fonction de la hauteur intermédiaire (h) dans la couche à composition graduelle (3).

3. Pièce mécanique (1) selon la revendication 1 ou selon la revendication 2, **caractérisée en ce que** la somme des proportions molaires de silicium et d'aluminium est constante quelle que soit la position de la hauteur intermédiaire (h) dans la couche composition graduelle (3).

4. Pièce mécanique (1) selon l'une des revendications précédentes, **caractérisée en ce que** la couche à composition graduelle (3) comporte les matériaux de phase MAX Ti3AIC2 et Ti3SiC2.

5. Pièce mécanique (1) selon l'une des revendications précédentes, **caractérisé en ce qu'**elle comporte :
- Une sous-couche (4), comportant essentiellement du Silicium dont l'épaisseur peut être comprise entre 10µm et 100 µm ;
- Une couche à composition graduelle (3) d'une épaisseur comprise entre 50 µm et 500 µm, avec une substitution du Si par l'AI en s'éloignant de la pièce à un taux compris entre 0.1 et 0.4 at%/µm ;
- Une couche génératrice (6) d'une épaisseur de 10 à 300 µm, composée essentiellement de Ti2AIC de manière à générer de l'alumine en surface lorsqu'elle est oxydée, pour augmenter la résistance en milieu humide ;
- Une couche d'alumine (7) ;
- Une barrière environnementale (8) formée de céramique, d'une épaisseur comprise entre 50 µm à 1000 µm, configurée pour limiter les transferts entre le milieu extérieur et la pièce (1).

6. Pièce mécanique (1) selon l'une des revendications 1 à 4, **caractérisée en ce qu'**elle comporte :
- Une sous-couche (4) de silicium dont l'épaisseur peut être comprise entre 10µm et 100 µm ;
- Une couche à composition graduelle (3) d'une épaisseur comprise entre 50 µm et 500 µm, avec une substitution du Si par l'Al en s'éloignant de la pièce à un taux compris entre 0.1 et 0.4 at%/µm ;
- Une couche génératrice (6) d'une épaisseur de 50 à 300 µm composée essentiellement de Ti2AIC de manière à générer de l'alumine en surface lorsqu'elle est oxydée ;
- Une couche d'alumine (7).

7. Pièce mécanique (1) selon l'une des revendications 1 à 4, **caractérisée en ce qu'**elle comporte en outre :
- Une couche à composition graduelle (3) d'une épaisseur comprise entre 50 µm et 500 µm, avec une substitution du Si par l'AI en s'éloignant de la pièce à un taux compris entre 0.1 et 0.4 at%/µm ;
- Une couche génératrice (6) d'une épaisseur de 50 à 300 µm composée essentiellement de Ti3AlC2, configurée pour générer de l'alumine en surface lorsqu'elle est oxydée ;
- Une couche d'alumine (7).

8. Procédé de dépôt (9) d'au moins une couche de protection (2) sur une pièce mécanique (1), la couche de protection (2) comportant au moins une couche à composition graduelle (3), le procédé (9) comportant les étapes suivantes :
- Réalisation de la couche à composition graduelle (3) par projection thermique des espèces composant ladite couche (3) ;
**caractérisé en ce que** la couche à composition graduelle (3) comporte au moins un matériau de phase MAX de silicium et un matériau de phase MAX d'aluminium, et **en ce que** la couche à composition graduelle (3) est réalisée en injectant dans un dispositif de projection thermique (11) d'une part des particules de matériau de phase MAX d'aluminium et d'autre part des particules de matériau de phase MAX de silicium, le matériau de phase MAX d'aluminium se substituant peu à peu au matériau de phase MAX de silicium en fonction de la hauteur de couche réalisée.

9. Procédé de dépôt (9) d'au moins une couche de matière sur une pièce (1) selon la revendication 8, **caractérisé en ce que** les particules de matériau de phase MAX d'aluminium et de matériau de phase MAX de silicium sont des poudres de Ti3AIC2 et de Ti3SiC2 mises en suspension dans un solvant dans deux contenants respectifs, les suspensions de Ti3AIC2 et de Ti3SiC2 étant ensuite injectées en proportion contrôlée dans un plasma (10) configuré pour chauffer et projeter les suspensions de matériau de phase MAX sur la pièce (1), réalisant ainsi le dépôt.

10. Procédé de dépôt (9) d'au moins une couche de matière sur une pièce (1) selon la revendication 9, **caractérisé en ce que** le solvant est un solvant aqueux ou non aqueux configuré pour limiter la l'oxydation des particules de Ti3AIC2 et de Ti3SiC2, de manière à limiter la présence d'oxydes dans la couche à composition graduelle (3).

## Patentansprüche

1. Mechanisches Teil (1), das zumindest teilweise einen Keramikmatrix-Verbundwerkstoff umfasst, wobei der Verbundwerkstoff zumindest lokal von mindestens einer Schutzschicht (2) gegen Schädigungen durch Umwelteinflüsse bedeckt ist, **dadurch gekennzeichnet, dass** die Schutzschicht (2) eine Beschichtungsschicht (3) mit gradueller Zusammensetzung umfasst, wobei diese Schicht (3) mit gradueller Zusammensetzung mindestens einen Silizium-MAX-Phasen-Werkstoff und einen Aluminium-MAX-Phasen-Werkstoff umfasst, wobei die Schicht (3) mit gradueller Zusammensetzung sich in der Schutzschicht (2) zwischen einer ersten Höhe (h3) in Bezug auf das mechanische Teil (1) und einer zweiten Höhe (h4) in Bezug auf das mechanische Teil (3) erstreckt, wobei die Zusammensetzung der Schicht (3) mit gradueller Zusammensetzung auf der ersten Höhe (h3) kein Aluminium umfasst, wobei die Zusammensetzung der Schicht (3) mit gradueller Zusammensetzung auf der zweiten Höhe (h4) kein Silizium umfasst, wobei eine Zwischenhöhe (h), die sich zwischen der ersten Höhe (h3) und der zweiten Höhe (h4) befindet, eine Zusammensetzung aufweist, die Aluminium und Silizium umfasst, wobei der Aluminiumanteil und der Siliziumanteil sich in der Schicht (3) mit gradueller Zusammensetzung in Abhängigkeit von der Position der Zwischenhöhe (h) ändern, wobei der Aluminiumanteil bei zunehmender Nähe der Zwischenhöhe (h) zu der zweiten Höhe (h4) zunimmt.

2. Mechanisches Teil (1) nach Anspruch 1, **dadurch gekennzeichnet, dass** der Aluminiumanteil und der Siliziumanteil sich linear in Abhängigkeit von der Zwischenhöhe (h) in der Schicht (3) mit gradueller Zusammensetzung ändern.

3. Mechanisches Teil (1) nach Anspruch 1 oder nach Anspruch 2, **dadurch gekennzeichnet, dass** die Summe der Molverhältnisse von Silizium und Aluminium unabhängig von der Position der Zwischenhöhe (h) in der Schicht (3) mit gradueller Zusammensetzung ist.

4. Mechanisches Teil (1) nach einem der vorhergehenden Ansprüche, **dadurch gekennzeichnet, dass** die Schicht (3) mit gradueller Zusammensetzung die Ti3AlC2- und Ti3SiC2-MAX-Phasen-Werkstoffe umfasst.

5. Mechanisches Teil (1) nach einem der vorhergehenden Ansprüche, **dadurch gekennzeichnet, dass** es umfasst:
- eine Teilschicht (4), die im Wesentlichen Silizium umfasst, deren Dicke zwischen 10 µm und 100 µm betragen kann;
- eine Schicht (3) mit gradueller Zusammensetzung mit einer Dicke zwischen 50 µm und 500 µm, mit Substitution des Si durch das Al bei zunehmendem Abstand von dem Teil mit einem Anteil zwischen 0,1 und 0,4 At.-%/µm;
- eine Erzeugungsschicht (6) mit einer Dicke von 10 bis 300 µm, die im Wesentlichen aus Ti2AlC besteht, derart dass an der Oberfläche Aluminiumoxid erzeugt wird, wenn sie oxidiert wird, um die Beständigkeit in feuchter Umgebung zu erhöhen;
- eine Aluminiumoxidschicht (7);
- eine Umweltbarriere (8), die aus Keramik gebildet ist, mit einer Dicke zwischen 50 µm und 1000 µm, die dazu ausgestaltet ist, die Übertragungen zwischen der äußeren Umgebung und dem Teil (1) zu begrenzen.

6. Mechanisches Teil (1) nach einem der Ansprüche 1 bis 4, **dadurch gekennzeichnet, dass** es umfasst:
- eine Teilschicht (4) aus Silizium, deren Dicke zwischen 10 µm und 100 µm betragen kann;
- eine Schicht (3) mit gradueller Zusammensetzung mit einer Dicke zwischen 50 µm und 500 µm mit einer Substitution des Si durch das Al mit zunehmendem Abstand von dem Teil mit einem Anteil zwischen 0,1 und 0,4 At.-%/µm;
- eine Erzeugungsschicht (6) mit einer Dicke von 50 bis 300 µm, die im Wesentlichen aus Ti2AlC besteht, derart, dass an der Oberfläche Aluminiumoxid erzeugt wird, wenn sie oxidiert wird;
- eine Schicht (7) aus Aluminiumoxid.

7. Mechanisches Teil (1) nach einem der Ansprüche 1 bis 4, **dadurch gekennzeichnet, dass** sie ferner umfasst:
- eine Schicht (3) mit gradueller Zusammensetzung mit einer Dicke zwischen 50 µm und 500 µm mit einer Substitution des Si durch das Al mit zunehmendem Abstand von dem Teil mit einem Anteil zwischen 0,1 und 0,4 At.-%/µm;
- eine Erzeugungsschicht (6) mit einer Dicke von 50 bis 300 µm, die im Wesentlichen aus Ti3AlC2 besteht, derart, dass an der Oberfläche Aluminiumoxid erzeugt wird, wenn sie oxidiert wird;
- eine Schicht (7) aus Aluminiumoxid.

8. Verfahren (9) zum Aufbringen mindestens einer Schutzschicht (2) auf einem mechanischen Teil (1), wobei die Schutzschicht (2) mindestens eine Schicht (3) mit gradueller Zusammensetzung umfasst, wobei das Verfahren (9) die folgenden Schritte umfasst:
- Herstellung der Schicht (3) mit gradueller Zusammensetzung durch thermisches Spritzen der Spezies, aus denen die Schicht (3) besteht;
**dadurch gekennzeichnet, dass** die Schicht (3) mit gradueller Zusammensetzung mindestens einen Silizium-MAX-Phasen-Werkstoff und einen Aluminium-MAX-Phasen-Werkstoff umfasst, und dadurch, dass die Schicht (3) mit gradueller Zusammensetzung durch Einspritzen einerseits der Partikel aus Aluminium-MAX-Phase und andererseits der Partikel aus Silizium-MAX-Phase in eine Vorrichtung (11) zum thermischen Spritzen ausgeführt wird, wobei der Aluminium-MAX-Phasen-Werkstoff nach und nach den Silizium-MAX-Phasen-Werkstoff in Abhängigkeit von der Höhe der hergestellten Schicht substituiert.

9. Verfahren (9) zum Aufbringen mindestens einer Werkstoffschicht auf einem Teil (1) nach Anspruch 8, **dadurch gekennzeichnet, dass** die Partikel aus Aluminium-MAX-Phasen-Werkstoff und aus Silizium-MAX-Phasen-Werkstoff Ti3AlC2- und Ti3SiC2-Pulver sind, die in einem Lösungsmittel in zwei entsprechenden Behältern in Suspension gehalten werden, wobei die Ti3AlC2- und Ti3SiC2-Suspensionen dann in kontrolliertem Verhältnis in ein Plasma (10) eingespritzt werden, das dazu ausgestaltet ist, die MAX-Phasen-Werkstoffsuspensionen zu erwärmen und auf das Teil (1) zu spritzen, wodurch das Aufbringen ausgeführt wird.

10. Verfahren (9) zum Aufbringen mindestens einer Werkstoffschicht auf einem Teil (1) nach Anspruch 9, **dadurch gekennzeichnet, dass** das Lösungsmittel ein wässriges oder nichtwässriges Lösungsmittel ist, das dazu ausgestaltet ist, die Oxidation der Ti3AlC2- und Ti3SiC2-Partikel zu begrenzen, derart, dass das Vorhandensein von Oxiden in der Schicht (3) mit gradueller Zusammensetzung begrenzt wird.

## Claims

1. Mechanical part (1) including at least partially a ceramic matrix composite material, said composite material being at least coated locally with at least one protective layer (2) against environmental degradation, **characterized in that** the protective layer (2) includes a gradual composition coating layer (3), said gradual composition layer (3) including at least one silicon MAX phase material and one aluminium MAX phase material, the gradual composition layer (3) extending within the protective layer (2) between a first height (h3) with respect to the mechanical part (1) and a second height (h4) with respect to the mechanical part (3), the composition of the gradual composition layer (3) at the first height (h3) having no aluminium, the composition of the gradual composition layer (3) at the second height (h4) having no silicon, an intermediate height (h) located between the first height (h3) and the second height (h4) having a composition including aluminium and silicon, the silicon portion and the aluminium portion gradually evolving in the gradual composition layer (3) as a function of the position of the intermediate height (h), the aluminium portion increasing when the intermediate height (h) approaches the second height (h4).

2. Mechanical part (1) according to claim 1, **characterized in that** the aluminium portion and the silicon portion evolve in a linear manner as a function of the intermediate height (h) in the gradual composition layer (3).

3. Mechanical part (1) according to claim 1 or according to claim 2, **characterized in that** the sum of the molar proportions of silicon and aluminium is constant whatever the position of the intermediate height (h) in the gradual composition layer (3).

4. Mechanical part (1) according to one of the preceding claims **characterized in that** the gradual composition layer (3) includes Ti3AIC2 and Ti3SiC2 MAX phase materials.

5. Mechanical part (1) according to one of the preceding claims, **characterized in that** it includes:
- A sublayer (4), essentially including silicon whose thickness can be between 10 µm and 100 µm ;
- A gradual composition layer (3) whose thickness is between 50 µm and 500 µm with substitution of Si by Al on moving away from the part at a rate between 0.1 and 0.4 at%/µm;
- A generating layer (6) whose thickness is between 10 and 300 µm essentially consisting of Ti2AlC such that it generates alumina at the surface when it is oxidized, to increase resistance in a humid environment;
- An alumina layer (7);
- An environmental barrier (8) made of ceramics with a thickness between 50 µm and 1000 µm, designed to limit transfer between the external environment and the part (1).

6. Mechanical part (1) according to one of claims 1 to 4, **characterized in that** it includes:
- A sublayer (4) of silicon whose thickness can be between 10 µm and 100 µm;
- A gradual composition layer (3) whose thickness is between 50 µm and 500 µm, with substitution of Si by Al on moving away from the part at a rate between 0.1 and 0.4 at%/µm;
- A generating layer (6) whose thickness is between 50 and 300 µm essentially consisting of Ti2AlC such that it generates alumina at the surface when it is oxidized;
- An alumina layer (7).

7. Mechanical part (1) according to claims 1 to 4, **characterized in that** it further includes:
- A gradual composition layer (3) whose thickness is between 50 µm and 500 µm, with substitution of Si by Al on moving away from the part at a rate between 0.1 and 0.4 at%/µm;
- A generating layer (6) whose thickness is between 50 and 300 µm essentially consisting of Ti3AlC2 designed to generate alumina at the surface when it is oxidized;
- An alumina layer (7).

8. Method for depositing (9) at least one protective layer (2) on a mechanical part (1), the protective layer (2) including at least one gradual composition layer (3), the method (9) including the following steps:
- Realization of the gradual composition layer (3) by thermal spraying of the species composing said layer (3);
**characterized in that** the gradual composition layer (3) includes at least one silicon MAX phase material and one aluminium MAX phase material, and **in that** the gradual composition layer (3) is produced by injecting into a thermal spraying device (11) particles of the aluminium MAX phase material, on the one hand, and particles of the silicon MAX phase material, on the other hand, the aluminium MAX phase material gradually replacing the silicon MAX phase material as a function of the layer height achieved.

9. Method for depositing (9) at least one layer of material on a part (1) according to claim 8, **characterized in that** the particles of the aluminium MAX phase material and the silicon MAX phase material are powders of Ti3AIC2 and Ti3SiC2 suspended in a solvent in two separate containers, the Ti3AIC2 and Ti3SiC2 suspensions then being injected in a controlled proportion into a plasma (10) designed to heat and spray the particles in suspension of the MAX phase material onto the part (1), thus creating a deposit.

10. Method for depositing (9) at least one layer of material on a part (1) according to claim 9, **characterized in that** the solvent is an aqueous or a non-aqueous solvent designed to limit the formation of oxides from Ti3AIC2 and Ti3SiC2 particles, so as to limit the presence of oxides in the gradual composition layer (3).
